(19) Europäisches Patentamt
European Patent Office
Office européen des brevets

(11) Veröffentlichungsnummer: 0 367 011 A2

(12) # EUROPÄISCHE PATENTANMELDUNG

(21) Anmeldenummer: 89119203.1

(51) Int. Cl.5 C08G 65/26 , C08L 71/02

(22) Anmeldetag: 17.10.89

(30) Priorität: 29.10.88 DE 3836902

(43) Veröffentlichungstag der Anmeldung:
09.05.90 Patentblatt 90/19

(84) Benannte Vertragsstaaten:
BE DE FR GB IT NL

(71) Anmelder: BAYER AG

D-5090 Leverkusen 1 Bayerwerk(DE)

(72) Erfinder: Rasp, Christian, Dr.
Klutstein 13
D-5060 Bergisch Gladbach 2(DE)
Erfinder: Gupta, Pramod, Dr.
Langemarckstrasse 27
D-5012 Bedburg(DE)
Erfinder: Perrey, Hermann, Dr.
Auf der Rheinaue 8
D-4150 Krefeld 11(DE)
Erfinder: Sandhagen, Hans-Joachim, Dr.
Claudiusstrasse 32
D-4047 Dormagen(DE)

(54) **Polyoxyalkylenblockcopolymere, Verfahren zur Herstellung und ihre Verwendung.**

(57) Es wurden neue Polyoxyalkylenblockcopolymere mit wesentlich verbesserter Verdickerwirkung in wäßrigen Systemen und ein Verfahren zu ihrer Herstellung gefunden. Die neuen Polyoxyalkylenblockcopolymere eignen sich insbesondere als Verdicker für auf Wasser basierende funktionelle Flüssigkeiten.

EP 0 367 011 A2

## Polyoxyalkylenblockcopolymere, Verfahren zur Herstellung und ihre Verwendung

Die Erfindung betrifft neue Polyoxyalkylenblockcopolymere, ein Verfahren zu ihrer Herstellung und ihre Verwendung als Verdickungsmittel für wäßrige Systeme, z.B. auf Wasser basierende funktionelle Flüssigkeiten wie Schmiermittel, Hilfsmittel bei der Metallbearbeitung und Hydraulik- und Wärmeübertragungsflüssigkeiten.

Polyoxyalkylencopolymere sind in großer Zahl bekannt (siehe z.B.:

(a) US-PS 4 481 367,
(b) US-PS 2 979 528,
(c) US-PS 2 674 619,
(d) US-PS 3 472 781,
(e) US-PS 4 452 712,
(f) US-PS 2 677 700,
(g) EP-A 54 953,
(h) EP-B 47 371,
(i) EP-A 116 564 = WO 84/361,
(k) EP-A 109 515,
(l) DD-P 237 178,
(m) DE-A 2 220 338,
(n) Macromolecules 1987, (20) Seiten 3089-3091),
(o) Technical Data on Pluronic® Polyols Kundenzirkular der Fa. BASF-Wyandotte Corp.

Die Polyoxyalkylencopolymere lassen sich unterteilen in Polyoxyalkylencopolymere, in denen die Alkylenoxideinheiten in statistischer Verteilung in den auf den Starterverbindungen erzeugten Polyoxyalkylenketten vorliegen (siehe z.B. (a) und (k)) und Polyoxyalkylencopolymere, in denen die verschiedenen Alkylenoxid-Einheiten blockweise in den auf den Starterverbindungen erzeugten Polyoxyalkylenketten angeordnet sind. Bei diesen sogenannten Polyoxyalkylenblockcopolymeren kann man wiederum drei verschiedene Typen A, B und C unterscheiden. Die Polyoxyalkylencopolymere des Typs A bestehen aus einem Mittelstück, das Ethylenoxid- und Propylenoxid-Einheiten in statistischer Verteilung enthält und einem darauf polymerisierten einheitlichen Block aus Ethylenoxid-oder Propylenoxid-Einheiten (siehe z.B. (m)).

Die Polyoxyalkylenblockcopolymere des Typs B bestehen aus einem an den Starter gebundenen hydrophilen, vorwiegend aus Ethylenoxid-Einheiten aufgebauten Block und einem an diesen hydrophilen Block gebundenen hydrophoben, vorwiegend aus Propylenoxid-Einheiten aufgebauten Block (siehe z.B. (d) und (e)).

Die Polyoxyalkylenblockcopolymere des Typs C bestehen aus einem an den Starter gebundenen hydrophoben, allein oder vorwiegend aus Propylenoxid-Einheiten aufgebauten Block und einem an diesen hydrophoben Block gebundenen hydrophilen, allein oder vorwiegend aus Ethylenoxid-Einheiten aufgebauten Block (siehe (b), (c), (f), (g), (h), (k), (l),(n), (o)).

Außerdem sind auch Polyoxyalkylenblockcopolymere des Typs C bekannt, die durch Umsetzung mit Epoxiden aus $\alpha$-Olefinen modifiziert wurden (siehe (i)).

Verschiedene der vorstehend genannten Polyoxyalkylen(block)copolymere wurden bereits als Verdickungsmittel für wäßrige Systeme vorgeschlagen.

Überraschenderweise wurde jetzt gefunden, daß man zu Polyoxyalkylenblockcopolymeren des Typs C mit völlig neuen, interessanten und vorteilhaften Eigenschaften gelangt, wenn man in den Copolymeren des Typs C das Molekulargewicht insgesamt und vor allem das Molekulargewicht des hydrophilen Blocks wesentlich vergrößert, so daß dieser mindestens die 5-30-fache, vorzugsweise die 8-20-fache Anzahl an Alkylenoxid-Einheiten aufweist, wie der hydrophobe Block.

In den vorbekannten Polyoxyalkylenblockcopolymeren des Typs C und auch in dem in (m) beschriebenen Polyoxyalkylenblockcopolymer beträgt die Anzahl der Alkylenoxid-Einheiten im hydrophilen Block höchstens das 4-fache der Anzahl der Alkylenoxid-Einheiten im hydrophoben Block (siehe z.B. (f) und (o)) und ist in den meisten Fällen überhaupt kleiner als die Anzahl der Alkylenoxid-Einheiten in den hydrophoben Blöcken (siehe z.B. (l)).

Überraschenderweise wurde gefunden, daß durch die erfindungsgemäße Molekulargewichtsvergrößerung und die neuartige Verteilung der Ethylenoxid- und Propylenoxid-Einheiten innerhalb des Moleküls des Blockcopolymers Polyoxyalkylenblockcopolymere mit neuen und wesentlich günstigeren Eigenschaften (stärkerer Verdickerwirkung in wäßrigen Systemen, bei gleichzeitig sehr guter Scherstabilität und gleichzeitig sehr guten Schmierstoffeigenschaften) erhalten werden, obwohl das Verhältnis der Ethylenoxid-und

Propylenoxid-Einheiten im Gesamtpolymer in dem an sich bekannten Bereich von 2-3,5/1 liegt.

Die erfindungsgemäßen Polyoxyalkylenblockcopolymere zeigen in wäßrigen Lösungen eine ausgeprägte Viskositätsanomalie. Im Temperaturbereich von 20 bis 50° C erhöht sich die Viskosität der wäßrigen Lösungen in Abhängigkeit von der angewandten Konzentration um bis zum 30-fachen der Normalviskosität, in einigen Fällen sogar bis zur Vergelung. Es wurde gefunden, daß Viskositätsanomalie und Verdickerwirkung eng miteinander verbunden sind und das Polyoxyalkylenblockcopolymere, deren wäßrige Lösungen eine starke Viskositätsanomalie aufweisen, auch eine hohe Verdickungswirkung besitzen.

Die Erfindung betrifft daher Polyoxyalkylenblockcopolymere, die aus einem an den Starter gebundenen hydrophoben, aus Propylenoxid-Einheiten oder überwiegend aus Propylenoxid-Einheiten aufgebauten Polyoxyalkylenblock (P) und einem hydrophilen, aus Ethylenoxid-Einheiten oder überwiegend aus Ethylenoxid-Einheiten aufgebauten Polyoxyalkylenblock E aufgebaut sind, die dadurch gekennzeichnet sind, daß der Polyoxyalkylenblock P das Umsetzungsprodukt eines monomolekularen Starters S mit 20 bis 45 Mol (je Mol aktiven Wasserstoff in S) Propylenoxid oder eines vorwiegend aus Propylenoxid bestehenden $C_2$-$C_3$-Alkylenoxidgemisches ist und daß auf dieses Umsetzungsprodukt P, gegebenenfalls nach einer partiellen oder vollständigen Aminierung der OH-Gruppen des Umsetzungsproduktes P, ein hydrophiler aus Ethylenoxid-oder - vorzugsweise - überwiegend aus Ethylenoxid-Einheiten aufgebauter Polyoxy-$C_2$-$C_3$-alkylenblock E aufpolymerisiert ist, der eine solche Anzahl an $C_2$-$C_3$-Alkylenoxid-Einheiten enthält, daß auf eine Alkylenoxid-Einheit im Polyoxyalkylenblock P 5 bis 30, vorzugsweise 8 bis 20 Alkylenoxid-Einheiten im Polyoxyalkylenblock E entfallen.

Die erfindungsgemäßen Polyoxyalkylenblockcopolymere lassen sich durch die Formel

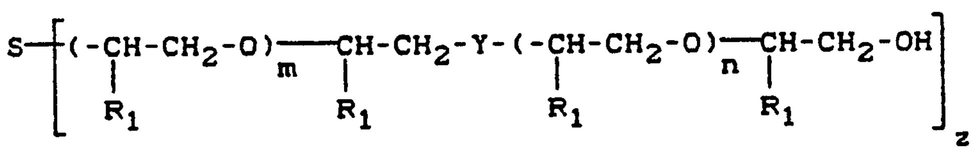

(I)

beschreiben; in dieser bedeuten

S einen, gegebenenfalls Sauerstoff, Schwefel und/oder Stickstoff enthaltenden, nach dem Entfernen der aktiven H-Atome verbliebenen Rest einer organischen Verbindung,

$R_1$ H, $CH_3$,

Y Sauerstoff oder die Gruppe

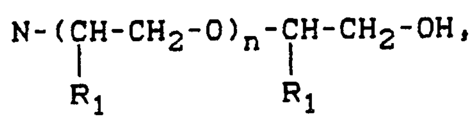

z eine ganze Zahl von 1 bis 8, vorzugsweise 2 bis 4,

m eine ganze Zahl von 20 bis 45 mit der Maßgabe, daß in mindestens 60 %, vorzugsweise in 65 bis 100 % der

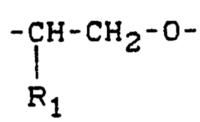

Einheiten $R_1$ = $CH_3$ ist,

n eine ganze Zahl von 100 bis 600, mit der Maßgabe, daß in mindestens 70 %, vorzugsweise in 70 bis 95 % der

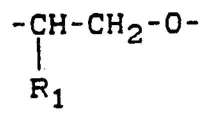

Einheiten $R_1$ = H ist.

Die erfindungsgemäßen Polyoxyalkylenblockcopolymere werden erhalten, indem man eine (Zerewitinoff) aktive Wasserstoffatome aufweisende monomolekulare Verbindung (S) zunächst je Mol aktiven Wasserstoffs mit 20 bis 45 Mol Propylenoxid oder eines mindestens 60 Mol-%, vorzugsweise 65 bis 95 Mol-% Propylenoxid enthaltenden $C_2$-$C_3$-Alkylenoxid-Gemisches in an sich bekannter Weise umsetzt und das auf diese Weise erhaltene hydrophobe Blockpolymer P, gegebenenfalls nach partieller oder vollständiger Aminierung der OH-Gruppen des Blockpolymers, in ebenfalls bekannter Weise je Mol aktiven Was serstoffs in der monomolekularen Ausgangsverbindung mit 100 bis 600 Mol Ethylenoxid oder eines mindestens 70 Mol-%, vorzugsweise 70 bis 95 Mol-% Ethylenoxid enthaltenden $C_2$-$C_3$-Alkylenoxid-Gemisches umsetzt.

Die Erfindung betrifft daher auch ein Verfahren zur Herstellung der erfindungsgemäßen Polyoxyalkylenblockcopolymere der Formel (I) das dadurch gekennzeichnet ist, daß man eine (Zerewitinoff) aktive Wasserstoffatom aufweisende monomolekulare Verbindung (S) zunächst je Mol aktiven Wasserstoffs mit 20 bis 45 Mol Propylenoxid oder eines mindestens 60 Mol-%, vorzugsweise 65 bis 100 Mol-% Propylenoxid enthaltenden $C_2$-$C_3$-Alkylenoxid-Gemisches in an sich bekannter Weise umsetzt und das auf diese Weise erhaltene hydrophobe Blockcopolymer P, gegebenenfalls nach partieller oder vollständiger Aminierung der OH-Gruppen des Blockcopolymers, in ebenfalls bekannter Weise je Mol aktiven Wasserstoffs in der monomolekularen Ausgangsverbindung mit 100 bis 600 Mol Ethylenoxid oder eines mindestens 70 Mol-%, vorzugsweise 70 bis 95 Mol-% Ethylenoxid enthaltenden $C_2$-$C_3$-Alkylenoxid-Gemisches umsetzt.

Als monomolekulare, zerewitinoffaktive Wasserstoffatome aufweisende Ausgangsverbindungen (Starter S) kommen z.B. solche in Betracht, die zerewitinoffaktive Wasserstoffatome, gebunden an C-, O-, S- und/oder N-Atomen, enthalten. Vorzugsweise werden die für die Herstellung von Polyoxyalkylencopolymeren üblicherweise verwendeten Starter, mono- bis octafunktionelle, vorzugsweise di-bis tetrafunktionelle Polyole, di- bis tetrafunktionelle Mercaptane und di- bis tetrafunktionelle Polyamine verwendet. Als Vertreter dieser Verbindungsklassen seien beispielsweise genannt: Monoalkohole wie Methanol, Ethanol, Propanol, n-Octanol, 2-Ethyl-hexanol und Dodecanol; Phenole, wie Nonyl- und Dodecylphenol. Dialkohole wie Ethylenglykol, 1,2- und 1,3-Propylenglykol, Diethylenglykol, Dipropylenglykol, 1,4-Butylenglykol, 1,6-Hexamethylenglykol; Triole wie Glycerin und Trimethylolpropan; Tetrole wie Pentaerythrit und 6-wertige Alkohole wie Sorbit; als 1-und 2-wertige Mercaptane seien beispielsweise das Dithioethylenglykol und das 1,4-Dithiobutylenglykol, ferner das Thioglycerin genannt. Als polyfunktionelle Amine seien vor allem Ammoniak, Hydrazin, Ethylendiamin, Diethylentriamin, Triethylentetramin, 1,3-Propylendiamin, 1,4-Butylendiamin, Hexamethylendiamin, Phenylendiamine und Monoamine wie Methylamin, Ethylamin, Isopropylamin, Butylamin, Benzylamin und Anilin, als monofunktionelle Amine seien Dimethylamin und Di-n-butylamin genannt.

Die Herstellung der erfindungsgemäßen Polyoxyalkylenblockcopolymere wird vorzugsweise wie folgt vorgenommen:

Der Starter wird im Reaktor vorgelegt und mit einer vorzugsweise 45 gew.-%igen wäßrigen Kaliumhydroxidlösung gemischt. Zur Bildung des Alkoholats wird die Mischung unter vermindertem Druck und unter Abdestillieren des Wassers auf 120 °C erwärmt. Anschließend wird unter Rühren in den Reaktor Propylenoxid oder eine Mischung aus Propylenoxid und Ethylenoxid bei einer Temperatur von 105-120 °C in einer solchen Geschwindigkeit eingeleitet, daß ein Druck von maximal 4 bar nicht überschritten wird. Nach beendeter Alkylenoxid-Zugabe und einer Nachreaktionszeit von etwa 4 Stunden wird die Reaktionsmischung mit weiterem Katalysator (wäßrige Kaliumhydroxidlösung) gemischt und zur Abtrennung des bei der Alkoholatbildung entstandenen Reaktionswassers solange unter vermindertem Druck auf 115 °C gehalten, bis kein Wasser mehr abdestilliert. Anschließend wird in den Reaktor Ethylenoxid oder eine Mischung aus Ethylenoxid und Propylenoxid bei einer Temperatur von 105-120 °C mit einer solchen Geschwindigkeit eingeleitet, daß ein Druck von maximal 4 bar nicht überschritten wird. Nach beendeter Alkylenoxid-Zugabe und einer Nachreaktionszeit von etwa 4 Stunden wird der Polyether in an sich bekannter Weise, nämlich durch Säurezugabe neutralisiert.

Bevorzugt wird Essigsäure zum Neutralisieren verwendet.

Für die Anwendung als Verdickungsmittel werden die erfindungsgemäßen Blockcopolymere mit Wasser und/oder Alkoholen, bevorzugt Diethylenglykol, verdünnt.

Für den Fall, daß ein Teil oder auch alle OH-Gruppen des in der ersten Alkoxylierungsstufe erhaltenen hydrophoben Copolymers aminiert werden soll, wird das Copolymer wie in der DE-OS 3 446 921 beschrieben, hydrierend aminiert. Das bei der Aminierung erhaltene hydrophobe Alkoxylierungsprodukt wird anschließend wie vorstehend beschrieben mit Ethylenoxid oder einem vorwiegend aus Ethylenoxid bestehenden Ethylenoxid-Propylenoxid-Gemisch alkoxyliert.

In der nachstehenden Tabelle 1 sind die in den einzelnen Beispielen verwendeten Starter, die Mengen an Starter, die Mengen an wäßriger Kalilauge, die für die Herstellung des hydrophoben Blockpolymeren verwendeten Mengen an Propylenoxid bzw. Propylenoxid/Ethylenoxid, die OH-Zahl der erhaltenen Zwischenprodukte, die Menge an Kaliumhydroxid, die für die zweite Alkoxylierungsstufe eingesetzt wurde, die für die Herstellung des hydrophilen Blockpolymeren verwendeten Mengen an Ethylenoxid und Propylenoxid und die OH-Zahl, der Wassergehalt und die Viskosität der erhaltenen Polyoxyalkylenblockcopolymere zusammengestellt.

**Tabelle 1**

| Ausgangskomponenten Reaktionsbedingungen | Beispiel 1 | Beispiel 2 | Beispiel 3 | Vergleichsbeispiel A | Beispiel 4 |
|---|---|---|---|---|---|
| **1. Stufe** | | | | | |
| Starter | Propylenglykol | Trimethylolpropan | Pentaerythrit | Diethylenglykolmonobutylether | Sorbit |
| Menge Starter (mol) | 0,11 | 0,07 | 0,05 | 0,21 | 0,07 |
| 45 gew.-%ige wäßrige KOH (g) | 2,4 | 2,4 | 3,81 | 3,33 | 9,52 |
| KOH/reaktive H-Atome (mol) | 0,0893 | 0,0893 | 0,143 | 0,125 | 0,179 |
| **2. Stufe** | | | | | |
| Propylenoxid/reaktive H-Atome (mol) | 16,667 | 16,503 | 21,631 | 10,262 | 27,951 |
| Ethylenoxid/reaktive H-Atome (mol) | - | - | 7,126 | 14,654 | 7,872 |
| OH-Zahl (mg KOH/g) | 56 | 56 | 35 | 40 | 28 |
| **3. Stufe** | | | | | |
| 45 gew.-%ige wäßrige KOH (g) | 13,3 | 13,3 | 13,3 | 13,3 | 13,3 |
| KOH/reaktive H-Atome (mol) | 0,500 | 0,499 | 0,498 | 0,499 | 0,249 |
| **4. Stufe** | | | | | |
| Propylenoxid/reaktive H-Atome (mol) | 128,84 | 128,56 | 123,21 | 133,921 | 44,233 |
| Ethylenoxid/reaktive H-Atome (mol) | 339,511 | 338,47 | 438,383 | 428,813 | 214,149 |
| **hydroxylgruppenhaltiger Polyetherpolyol** | | | | | |
| OH-Zahl (mg KOH/g) | 5,7 | 5,9 | 5,8 | 4,6 | 5,0 |
| Wassergehalt (%) | 0,01 | 0,02 | 0,01 | 0,01 | 0,02 |
| Viskosität bei 25°C (mPa.s) | 97900 | 117800 | 135840 | 23540 | 140400 |

**Tabelle 1**

| Ausgangskomponenten Reaktionsbedingungen | Beispiel 5 | Beispiel 6 | Vergleichs-beispiel B | Beispiel 7 | Beispiel 8 |
|---|---|---|---|---|---|
| **1. Stufe** | | | | | |
| Starter | Sorbit | Sorbit | Trimethylolpropan | Trimethylolpropan | Sorbit |
| Menge Starter (mol) | 0,07 | 0,07 | 0,14 | 0,14 | 0,07 |
| 45 gew.-%ige wäßrige KOH (g) | 9,52 | 9,52 | 4,74 | 4,74 | 9,52 |
| KOH/reaktive H-Atome (mol) | 0,119 | 0,119 | 0,0889 | 0,0889 | 0,119 |
| **2. Stufe** | | | | | |
| Propylenoxid/reaktive H-Atome (mol) | 28,014 | 28,000 | 7,406 | 16,437 | 28,014 |
| Ethylenoxid/reaktive H-Atome (mol) | 7,897 | 7,900 | 11,929 | - | 7,890 |
| OH-Zahl (mg KOH/g) | 28 | 28 | 56 | 56 | 28 |
| **3. Stufe** | | | | | |
| 45 gew.-%ige wäßrige KOH (g) | 13,3 | 13,3 | 13,3 | 13,3 | 13,3 |
| KOH/reaktive H-Atome (mol) | 0,249 | 0,249 | 0,249 | 0,249 | 0,249 |
| **4. Stufe** | | | | | |
| Propylenoxid/reaktive H-Atome (mol) | 86,588 | 14,230 | 64,706 | 55,655 | 44,310 |
| Ethylenoxid/reaktive H-Atome (mol) | 158,972 | 192,94 | 209,865 | 221,795 | 162,873 |
| **hydroxylgruppenhaltiger Polyetherpolyol** | | | | | |
| OH-Zahl (mg KOH/g) | 7,7 | 5,3 | 6,4 | 6,4 | 5,8 |
| Wassergehalt (%) | 0,01 | 0,01 | 0,03 | 0,04 | 0,05 |
| Viskosität bei 25°C (mPa.s) | 39281 | Fp.40,5-41,5°C | 96640 | 43510 | Fp. 36-38°C |

**Tabelle 1**

| Ausgangskomponenten Reaktionsbedingungen | Beispiel 9 | Beispiel 10 | Beispiel 11 | Beispiel 12 | Beispiel 13 |
|---|---|---|---|---|---|
| **1. Stufe** | | | | | |
| Starter | Sorbit | Propylenglykol | Trimethylolpropan | Trimethylolpropan | Dodecylphenol |
| Menge Starter (mol) | 0,07 | 0,11 | 0,14 | 0,14 | 0,20 |
| 45 gew.-%ige wäßrige KOH (g) | 9,52 | 3,42 | 8,60 | 9,88 | 3,53 |
| KOH/reaktive H-Atome (mol) | 0,119 | 0,128 | 0,161 | 0,185 | 0,132 |
| **2. Stufe** | | | | | |
| Propylenoxid/reaktive H-Atome (mol) | 28,016 | 24,335 | 30,418 | 35,100 | 22,319 |
| Ethylenoxid/reaktive H-Atome (mol) | 7,890 | - | - | - | - |
| OH-Zahl (mg KOH/g) | 28 | 39 | 31 | 27 | 38 |
| **3. Stufe** | | | | | |
| 45 gew.-%ige wäßrige KOH (g) | 13,3 | 13,3 | 13,3 | 13,3 | 13,3 |
| KOH/reaktive H-Atome (mol) | 0,249 | 0,499 | 0,249 | 0,249 | 0,496 |
| **4. Stufe** | | | | | |
| Propylenoxid/reaktive H-Atome (mol) | 58,516 | 121,135 | 41,862 | 37,300 | 140,020 |
| Ethylenoxid/reaktive H-Atome (mol) | 214,577 | 447,115 | 222,313 | 222,5 | 448,505 |
| **hydroxylgruppenhaltiger Polyetherpolyol** | | | | | |
| OH-Zahl (mg KOH/g) | 6,8 | 5,7 | 5,5 | 5,7 | 6,3 |
| Wassergehalt (%) | 0,06 | 0,04 | 0,04 | 0,03 | 0,01 |
| Viskosität bei 25°C (mPa.s) | Fp.53-56°C | 98300 | 169260 | 387100 | 24365 |

**Tabelle 1**

| Ausgangskomponenten Reaktionsbedingungen | Vergleichsbeispiel C | Vergleichsbeispiel D | Beispiel 14 | Beispiel 15 | Beispiel 16 |
|---|---|---|---|---|---|
| **1. Stufe** | | | | | |
| Starter | Ethylendiamin | Diethylenglykolmonobutylether | Trimethylolpropan | Sorbit | Propylenglykol |
| Menge Starter (mol) | 0,05 | 0,43 | 0,14 | 0,07 | 0,25 |
| 45 gew.-%ige wäßrige KOH (g) | 2,22 | 3,56 | 7,61 | 9,52 | 5,10 |
| KOH/reaktive H-Atome (mol) | 0,0833 | 0,0667 | 0,143 | 0,179 | 0,0893 |
| **2. Stufe** | | | | | |
| Propylenoxid/reaktive H-Atome (mol) | 15,915 | 6,058 | 23,203 | 29,514 | 15,064 |
| Ethylenoxid/reaktive H-Atome (mol) | - | 5,320 | 4,773 | 5,916 | - |
| OH-Zahl (mg KOH/g) | 60 | 75 | 35 | 28 | 56 |
| **3. Stufe** | | | | | |
| 45 gew.-%ige wäßrige KOH (g) | 13,3 | 13,3 | 13,3 | 13,3 | 13,3 |
| KOH/reaktive H-Atome (mol) | 0,499 | 0,249 | 0,250 | 0,249 | 0,233 |
| **4. Stufe** | | | | | |
| Propylenoxid/reaktive H-Atome (mol) | 140,727 | 86,491 | 49,077 | 42,836 | 46,437 |
| Ethylenoxid/reaktive H-Atome (mol) | 262,063 | 215,123 | 217,540 | 216,836 | 189,165 |
| **hydroxylgruppenhaltiger Polyetherpolyol** | | | | | |
| OH-Zahl (mg KOH/g) | 5,7 | 6,6 | 5,7 | 5,6 | 8,7 |
| Wassergehalt (%) | 0,01 | 0,01 | 0,01 | 0,02 | 0,04 |
| Viskosität bei 25°C (mPa.s) | 135400 | 11490 | 113410 | 151500 | 61582 |

**Tabelle 1**

| Ausgangskomponenten Reaktionsbedingungen | Beispiel 17 | Beispiel 18 | Vergleichsbeispiel E |
|---|---|---|---|
| **1. Stufe** | | | |
| Starter | Ethylendiamin | Diethylenglykol-monobutylether | Pentaerythrit |
| Menge Starter (mol) | 0,11 | 0,43 | 0,0335 |
| 45 gew.-%ige wäßrige KOH (g) | 4,44 | 4,85 | 0,931 |
| KOH/reaktive H-Atome (mol) | 0,0833 | 0,0909 | 0,0557 |
| **2. Stufe** | | | |
| Propylenoxid/reaktive H-Atome (mol) | 15,855 | 14,785 | 3,274 |
| Ethylenoxid/reaktive H-Atome (mol) | - | - | 9,318 |
| OH-Zahl (mg KOH/g) | 60 | 55 | 89 |
| **3. Stufe** | | | |
| 45 gew.-%ige wäßrige KOH (g) | 13,3 | 13,3 | 6,7 |
| KOH/reaktive H-Atome (mol) | 0,249 | 0,249 | 0,402 |
| **4. Stufe** | | | |
| Propylenoxid/reaktive H-Atome (mol) | 56,577 | 78,385 | 44,895 |
| Ethylenoxid/reaktive H-Atome (mol) | 169,009 | 214,147 | 137,593 |
| **hydroxylgruppenhaltiger Polyetherpolyol** | | | |
| OH-Zahl (mg KOH/g) | 5,9 | 6,1 | 10,6 |
| Wassergehalt (%) | 0,02 | 0,03 | 0,03 |
| Viskosität bei 25° C (mPa.s) | 109835 | 12636 | 40670 |

Die Erfindung betrifft ferner die Verwendung des Polyoxyalkylenblockcopolymere der Formel (I) als Verdikkungsmittel für wäßrige Systeme, z.B. auf Wasser basierende funktionelle Flüssigkeiten wie Schmiermittel, Hilfsmittel bei der Metallbearbeitung und Hydraulik- und Wärmeübertragungsflüssigkeiten.

Die ausgezeichnete Verdickerwirkung und Scherstabilität der in den Beispielen 1 bis 18 beschriebenen erfindungsgemäßen Polyoxyalkylenblockcopolymere ist aus den in Tabelle II angegebenen Viskositätswerten, die vor und nach der Scherbeanspruchung der verdickten wäßrigen Lösungen bestimmt wurden, ersichtlich.

Die Verdickerwirkung (Einstellung auf ISO VG 46) wurde in einer wäßrigen Lösung folgender Zusammensetzung bestimmt (alle Mengenangaben in Gew.-%):

1 Gafen LB 400 (Polyoxyethylen-octadecylenetherphosphat)
15 Monoethylenglykol
15 Diethylenglykol

4 Dipropylenglykol
0,1 Tolutriazol
0,4 Diethanolamin
0,5 Rewocoros RA-BE (Borsäureaminester)
45 Wasser
Triethanolaminzusatz bis zur Einstellung eines pH-Wertes von 9

Die Scherstabilität wurde gemäß DIN 51 382 mit 300 Zyklen bestimmt.

Tabelle II

| Verdickerwirkung und Scherstabilität | | | | |
|---|---|---|---|---|
| Polyoxyalkylenblockcopolymer gemäß Beispiel | angewandte Menge (Gew.-%) | Viskoskität $V_{40}$ | | rel. Viskositätsänderung (%) |
| | | vor | nach | |
| 1 | 15 | 45,9 | 46,7 | + 1,8 |
| 2 | 13,0 | 46,1 | 46,6 | + 1,1 |
| 3 | 13 | 45,7 | 46,5 | + 1,8 |
| 4 | 10 | 46,0 | 46,2 | + 0,4 |
| 5 | 14,5 | 45,9 | 46,8 | + 1,9 |
| 6 | 8 | 46,3 | 47,7 | + 3,0 |
| 7 | 11,5 | 45,8 | 46,9 | + 2,3 |
| 8 | 10,5 | 45,9 | 44,5 | - 3,1 |
| 9 | 10,0 | 45,6 | 46,2 | + 1,2 |
| 10 | 12,5 | 47,1 | 47,8 | + 1,5 |
| 11 | 10,0 | 43,1 | 44,7 | + 3,7 |
| 12 | 10,0 | 46,7 | 47,0 | + 0,7 |
| 13 | 15,0 | 45,8 | 46,0 | + 0,5 |
| 14 | 10,0 | 45,7 | 46,0 | + 0,7 |
| 15 | 10,0 | 44,5 | 44,5 | ± 0 |
| 16 | 11,5 | 47,8 | 48,8 | + 2,3 |
| 17 | 11 | 43,8 | 44,5 | + 1,5 |
| 18 | 13,5 | 46,3 | 47,8 | + 3,4 |
| | zum Vergleich | | | |
| A | 19,0 | 45,8 | 45,5 | - 0,6 |
| B | 15,0 | 46,0 | 47,1 | + 2,4 |
| C | 14,5 | 46,0 | 46,9 | + 1,9 |
| D | 22,0 | 42,5 | 42,7 | + 0,5 |
| E | 20 | 46,0 | 45,8 | - 0,4 |

Die Schmierstoffeigenschaft der wäßrigen Systeme, die die in den Beispielen 1 bis 18 beschriebenen erfindungsgemäßen Polyoxyalkylencopolymere enthalten, geht aus den in Tabelle III zusammengestellten Werten hervor, die bei den verschiedenen Schmierstoff-Tests (Almen-Wieland-Test; siehe M. Brunner und R. Pedrini, Schweizer Archiv, Annales Suisses, 21 (6), 169-171 (1955) und 21 (8), 251-257 (1955) und Reichert-Reibverschleiß-Test; siehe E. Kadmer und H. Danninger, Schmierungstechnik, 7 (5), 223-228 (1960)) erhalten wurden.

Für die Bestimmung der Schmierstoff-Eigenschaften wurden die zu untersuchenden Polyoxyalkylenblockcopolymere in Wasser (W) oder einem 1:1-Wasser/Monoethylenglykol-Gemisch (WE) in den in Tabelle III angegebenen Mengen [Gew.-%] bezogen auf das Gesamtgewicht der Lösungen, eingesetzt.

**Tabelle III**

| Polyoxyalkylen-blockcopolymer gemäß Beispiel | in | angewandte Menge [Gew.-%] | Almen-Wieland-Test Schweißkraft N | Almen-Wieland-Test Reibungskraft N | Temperatur (°C) | Reichert-Reibverschleiß-Test (bei 15 N Belastung) Verschleißmarke ($mm^2$) | Reichert-Reibverschleiß-Test (bei 15 N Belastung) Spez. Belastung [$kp/cm^2$] |
|---|---|---|---|---|---|---|---|
| 1 | W | 1 | 500 | 300 | 28 | 12,2 | 24,7 |
| | W | 5 | 11500 | 2500 | 88 | 7,6 | 39,8 |
| 2 | W | 1 | 1500 | 750 | 33 | 14,5 | 20,7 |
| | W | 5 | 9500 | 2200 | 83 | 8,6 | 33,8 |
| 3 | W | 1 | 2000 | 500 | 35 | 12,9 | 23,3 |
| | W | 5 | 12500 | 1900 | 84 | 7,6 | 38,2 |
| 4 | W | 1 | 1500 | 800 | 34 | 10,6 | 28,4 |
| | W | 5 | 2500 | 1300 | 40 | 8,4 | 35,6 |
| 5 | W | 1 | 1000 | 600 | 37 | 11,0 | 27,3 |
| | W | 5 | 4500 | 1700 | 52 | 7,5 | 40,5 |
| 6 | W | 1 | 1500 | 850 | 31 | 14,1 | 21,5 |
| | W | 5 | 8500 | 1700 | 64 | 9,4 | 32,1 |
| 7 | W | 1 | 1000 | 950 | 24 | 11,8 | 25,4 |
| | W | 5 | 7500 | 1800 | 62 | 8,7 | 34,6 |
| | WE | 1 | 2500 | 700 | 38 | 16,0 | 18,8 |
| | WE | 5 | 20000 | 2100 | 104 | 10,0 | 30,0 |
| 8 | W | 1 | 500 | 250 | 21 | 14.4 | 20,8 |
| | W | 5 | 10500 | 1900 | 75 | 9,2 | 32,5 |

**Tabelle III** (Fortsetzung)

| Polyoxyalkylen-blockcopolymer gemäß Beispiel | in | angewandte Menge [Gew.-%] | Almen-Wieland-Test Schweißkraft N | Almen-Wieland-Test Reibungskraft N | Temperatur (°C) | Reichert-Reibverschleiß-Test (bei 15 N Belastung) Verschleißmarke ($mm^2$) | Reichert-Reibverschleiß-Test (bei 15 N Belastung) Spez. Belastung [$kp/cm^2$] |
|---|---|---|---|---|---|---|---|
| 9 | W | 1 | 500 | 250 | 23 | 13,6 | 22,1 |
| | W | 5 | 6500 | 1600 | 63 | 8,7 | 34,5 |
| 10 | W | 1 | 1000 | 730 | 32 | 10,2 | 29,4 |
| | W | 5 | 2000 | 1500 | 40 | 6,5 | 46 |
| 11 | W | 1 | 2500 | 1400 | 47 | 10,7 | 28,0 |
| | W | 5 | 4500 | 1500 | 56 | 8,9 | 33,7 |
| 12 | W | 1 | 1500 | 750 | 31 | 13,0 | 23,0 |
| | W | 5 | 2000 | 1200 | 32 | 8,7 | 34,4 |
| 13 | W | 1 | 500 | 320 | 25 | 12,4 | 24,2 |
| | W | 5 | 1500 | 830 | 35 | 9,1 | 33,0 |
| 14 | W | 1 | 500 | 250 | 23 | 12,0 | 25,0 |
| | W | 5 | 1500 | 900 | 33 | 8,6 | 34,9 |
| 15 | W | 1 | 500 | 300 | 23 | 11,8 | 25,4 |
| | W | 5 | 1500 | 800 | 30 | 8,8 | 34,1 |
| 16 | W | 1 | 1000 | 400 | 27 | 13,3 | 22,6 |
| | W | 5 | 3000 | 1400 | 40 | 8,1 | 37,0 |
| 17 | W | 1 | 1000 | 500 | 33 | 14,3 | 21,0 |
| | W | 5 | 2500 | 1150 | 43 | 8,2 | 36,6 |
| 18 | W | 1 | 500 | 250 | 23 | 16,0 | 18,7 |
| | W | 5 | 500 | 250 | 25 | 9,2 | 32,6 |

**Tabelle III** - Fortsetzung

| Polyoxyalkylenblockcopolymer gemäß Beispiel | in | angewandte Menge [Gew.-%] | Almen-Wieland-Test Schweißkraft N | Almen-Wieland-Test Reibungskraft N | Temperatur (°C) | Reichert-Reibverschleiß-Test (bei 15 N Belastung) Verschleißmarke ($mm^2$) | Reichert-Reibverschleiß-Test (bei 15 N Belastung) Spez. Belastung [$kp/cm^2$] |
|---|---|---|---|---|---|---|---|
| | | | zum Vergleich | | | | |
| A | W | 1 | 500 | 300 | 23 | 15 | 20 |
| | | 5 | 1500 | 800 | 31 | 9,2 | 32,5 |
| B | W | 1 | 2000 | 750 | 32 | 13 | 23 |
| | | 5 | 2500 | 1000 | 35 | 9,0 | 33,2 |
| | WE | 1 | 2000 | 550 | 41 | 14,3 | 21,0 |
| | | 5 | 3000 | 750 | 42 | 10,0 | 29,9 |
| C | W | 1 | 1000 | 500 | 30 | 9,8 | 30,5 |
| | | 5 | 8500 | 2400 | 77 | 7,3 | 41,0 |
| D | W | 1 | 500 | 250 | 23 | 13,0 | 23,1 |
| | | 5 | 500 | 250 | 23 | 9,9 | 30,3 |
| E | W | 1 | 500 | 350 | 21 | 12,3 | 24,4 |
| | | 5 | 18500 | 1300 | 54 | 7,9 | 37,8 |
| | WE | 1 | 4500 | 1100 | 48 | 18,1 | 16,6 |
| | | 5 | 4000 | 1000 | 54 | 11,7 | 25,7 |
| $H_2O$ | | 100 | <500 | 250 | 26 | 29,4 | 10,2 |

## Ansprüche

1. Polyoxyalkylenblockcopolymere, die aus einem an den Starter gebundenen hydrophoben, aus Propylenoxid-Einheiten oder überwiegend aus Propylenoxid-Einheiten aufgebauten Polyoxyalkylenblock (P) und einem hydrophilen, aus Ethylenoxid-Einheiten oder überwiegend aus Ethylenoxid-Einheiten aufgebauten Polyoxyalkylenblock E aufgebaut sind, dadurch gekennzeichnet, daß der Polyoxyalkylenblock P das Umsetzungsprodukt eines monomolekularen Starters S mit 20 bis 45 Mol (je Mol aktiven Wasserstoff in S) Propylenoxid oder eines vorwiegend aus Propylenoxid bestehenden $C_2$-$C_3$-Alkylenoxidgemisches ist und daß auf dieses Umsetzungsprodukt P, gegebenenfalls nach einer partiellen oder vollständigen Aminierung der OH-Gruppen des Umsetzungsproduktes P, ein hydrophiler aus Ethylenoxid- oder überwiegend aus Ethylenoxid-Einheiten aufgebauter Polyoxy-$C_2$-$C_3$-alkylenblock E aufpolymerisiert ist, der eine solche Anzahl an $C_2$-$C_3$-Alkylenoxid-Einheiten enthält, daß auf eine Alkylenoxid-Einheit im Polyoxyalkylenblock P 5 bis 30 Alkylenoxid-Einheiten im Polyoxyalkylenblock E entfallen.

2. Polyoxyalkylenblockcopolymere gemäß Anspruch 1, dadurch gekennzeichnet, daß der hydrophile Block E ein überwiegend aus Ethylenoxid-Einheiten aufgebauter Polyoxy-$C_2$-$C_3$-alkylenblock ist und daß er so viele Alkylenoxid-Einheiten aufweist, so daß auf eine Alkylenoxid-Einheit im Polyoxyalkylenblock P 8 bis 20 Alkylenoxid-Einheiten entfallen.

3. Polyoxyalkylenblockcopolymere gemäß Anspruch 1, dadurch gekennzeichnet, daß sie der Formel

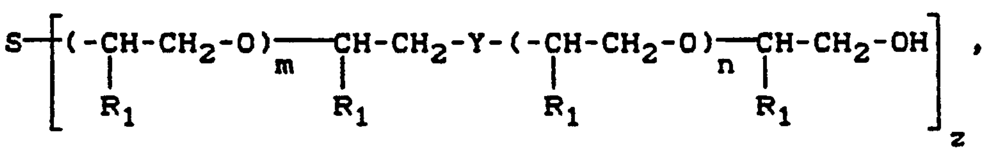

(I)

entsprechen, in der

S einen, gegebenenfalls Sauerstoff, Schwefel und/oder Stickstoff enthaltenden, nach dem Entfernen der aktiven H-Atome verbliebenen Rest einer organischen Verbindung,

$R_1$ H, $CH_3$,

Y Sauerstoff oder die Gruppe

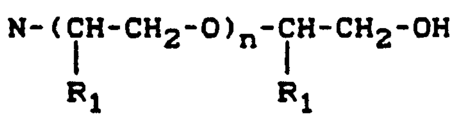

und

z eine ganze Zahl von 1 bis 8 bedeuten und

m für eine ganze Zahl von 20 bis 45 steht, mit der Maßgabe, daß in mindestens 60 % der

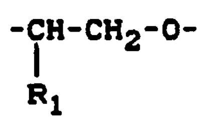

Einheiten $R_1$ = $CH_3$ ist und

n für eine ganze Zahl von 100 bis 600 steht, mit der Maßgabe, daß in mindestens 70 % der

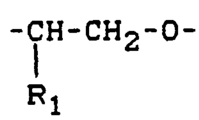

Einheiten $R_1$ = H ist.

4. Polyoxyalkylenblockcopolymere gemäß Anspruch 3, dadurch gekennzeichnet, daß z eine ganze Zahl von 2 bis 4 bedeutet, m für eine ganze Zahl von 20 bis 45 steht, mit der Maßgabe, daß in 65 bis 100 % der

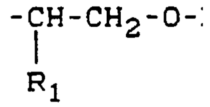

Einheiten $R_1 = CH_3$ ist und n für eine ganze Zahl von 100 bis 600 steht, mit der Maßgabe, daß in 70 bis 95 % der

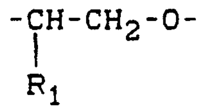

Einheiten $R_1 = H$ ist.

5. Verfahren zur Herstellung der Polyoxyalkylenblockcopolymere gemäß Ansprüchen 1-4, dadurch gekennzeichnet, daß man eine (Zerewitinoff) aktive Wasserstoffatom aufweisende monomolekulare Verbindung (S) zunächst je Mol aktiven Wasserstoffs mit 20 bis 45 Mol Propylenoxid oder eines mindestens 60 Mol-% Propylenoxid enthaltenden $C_2$-$C_3$-Alkylenoxid-Gemisches in an sich bekannter Weise umsetzt und das auf diese Weise erhaltene hydrophobe Blockcopolymer P, gegebenenfalls nach partieller oder vollständiger Aminierung der OH-Gruppen des Blockcopolymers, in ebenfalls bekannter Weise je Mol aktiven Wasserstoffs in der monomolekularen Ausgangsverbindung mit 100 bis 600 Mol Ethylenoxid oder eines mindestens 70 Mol-% Ethylenoxid enthaltenden $C_2$-$C_3$-Alkylenoxid-Gemisches umsetzt.

6. Verwendung der Polyoxyalkylenblockcopolymere gemäß einem der Ansprüche 1 bis 4 als Verdickungsmittel für wäßrige Systeme.

7. Verwendung der Polyoxyalkylenblockcopolymere gemäß Anspruch 6, dadurch gekennzeichnet, daß die wäßrigen Systeme auf Wasser basierende funktionelle Flüssigkeiten wie Schmiermittel, Hilfsmittel bei der Metallbearbeitung und Hydraulik- und Wärmeübertragungsflüssigkeiten sind.